# EUROPÄISCHE PATENTSCHRIFT

(11) **EP 1 020 314 B1**
(45) Veröffentlichungstag und Bekanntmachung des Hinweises auf die Patenterteilung: **22.10.2003**
(21) Anmeldenummer: 00100182.5
(22) Anmeldetag: 12.01.2000
(51) Int. Cl.: B60K 17/10, F16H 47/02

(54) **Antriebsstrang für ein Fahrzeug und Verfahren zum Steuern eines Antriebsstranges**
Vehicle propulsion system and method for its control
Ensemble de propulsion pour véhicule et procédé pour sa commande

(30) Priorität: 15.01.1999 DE 19901443
(43) Veröffentlichungstag der Anmeldung: 19.07.2000
(73) Patentinhaber: Sauer-Danfoss (Neumünster) GmbH & Co. OHG, 24539 Neumünster (DE); MERLO S.P.A. Industria Metalmeccanica, 12020 Frazione San Defendente di Cervasca (Cuneo) (IT)
(72) Erfinder: Braun, Tom, 24109 Melsdorf (DE)
(74) Vertreter: Leske, Thomas, Dr.

(56) Entgegenhaltungen:
- EP-A- 0 282 010
- EP-A- 0 339 202
- EP-A- 0 752 545

## Beschreibung

Die Erfindung betrifft einen Antriebsstrang für ein Fahrzeug und ein Verfahren zum Steuern eines Antriebsstranges nach dem Oberbegriff des Anspruchs 1.

Ein derartiger Antriebsstrang ist beispielsweise aus der EP-A-282 010 bekannt. Bei diesem bekannten Antriebsstrang sind eine Verbrennungskraftmaschine, ein hydrostatisches Getriebe, das eine verstellbare Hydropumpe und einen verstellbaren Hydromotor im geschlossenen Kreis umfasst, sowie ein schaltbares mechanische Wechselgetriebe, das keine der üblichen Synchronisationseinrichtungen aufweist, hintereinandergeschaltet angeordnet. Zudem ist eine Regeleinrichtung vorhanden, die zwei Regelgeräte umfasst. In einem der Regelgeräte ist eine Regler-Kennlinie gespeichert, die Aufschluss darüber gibt, ob das Fahrzeug sich im Zustand des normalen Antriebs oder im sogenannten Schiebebetrieb befindet, in dem das Fahrzeug über die Räder angetrieben wird und der Hydromotor als Pumpe arbeitet. In diesem Fall sorgt die Regeleinrichtung dafür, dass beim Einleiten des Gangwechsels in einen niedrigeren Gang des Wechselgetriebes das Übersetzungsverhältnis des hydrostatischen Getriebes in Richtung einer Verringerung der Abtriebsdrehzahl des Hydromotors verstellt wird. Auf diese Weise wird ein erwünschter Bremsvorgang eingeleitet und das Herunterschalten in den niedrigeren Gang erleichtert.

Die Erfindung betrifft auch ein Verfahren zum Steuern eines Antriebsstranges.

Generell ist es beim Betrieb von Antrieben, insbesondere bei Fahrzeugen nötig, dass bei Verwendung von Verbrennungskraftmaschinen, aufgrund ihres relativ schmalen nutzbaren Drehzahlbereichs, Übertragungs- und Getriebeeinrichtungen verwendet werden, welche einen last- bzw. geschwindigkeitsabhängigen Betrieb des Antriebsstranges erlauben. Da Verbrennungskraftmaschinen aufgrund ihrer Leistungscharakteristik außerdem bei geringen Umdrehungszahlen prinzipbedingt nur ein geringes Drehmoment zur Verfügung stellen könne, ist es außerdem notwendig, eine Trenneinrichtung bzw. Kupplung vorzusehen, welche ein Anfahren eines Fahrzeugs bzw. ein Hochlaufen einer Maschine ermöglicht. Außerdem werden insbesondere bei Fahrzeugen herkömmlicherweise Synchronisationseinrichtungen im Getriebe verwendet, welche ein Schalten zwischen unterschiedlichen Übersetzungsstufen während des Betriebs bzw. während der Fahrt zulassen. Entsprechende Getriebe erfordern einen hohen konstruktiven Aufwand.

Es werden in Fahrzeugen mit Verbrennungskraftmaschinen auch mechanische Schaltgetriebe ohne Kupplung und Synchronisationseinrichtung in Verbindung mit hydrostatischen Getriebe, deren Hydropumpe und Hydromotor im geschlossenen Kreis verbunden sind, verwendet. Das hydrostatische Getriebe dient dabei lediglich als Kupplung oder Drehmomentwandler. Aufgrund der fehlenden Synchronisationseinrichtungen ist es dabei oftmals erforderlich, das Fahrzeug für den Wechsel des Übersetzungsverhältnisses zuvor anzuhalten oder die Geschwindigkeit zumindest bis auf ein Minimum zu reduzieren, um einen erheblichen mechanischen Verschleiß des Schaltgetriebes zu vermeiden.

Es ist Aufgabe der vorliegenden Erfindung, einen Antriebsstrang zu schaffen, bei welchem das hydrostatische Getriebe mit einer elektronischen Steuereinheit zusammenwirkt, um somit auf einfache Weise ein schnelles und sicheres Trennen bzw. synchronisiertes Gangwechseln ohne weitere Kupplungs- bzw. Synchronisationseinrichtungen im Getriebe zu ermöglichen. Dabei besteht die Aufgabe des Verfahrens zum Steuern des Antriebsstranges darin, den Wechsel zwischen verschiedenen Übersetzungsverhältnissen des Getriebes während der Fahrt mittels einer Digitalelektronik besonders schnell, sicher und reproduzierbar zu steuern.

Die Aufgabe wird erfindungsgemäß mit einem Antriebsstrang nach Anspruch 1 und mit einem Verfahren zum Steuern eines Antriebsstranges nach Anspruch 6 gelöst.

Zweckmäßige Weiterbildungen sind in den jeweiligen abhängigen Ansprüchen definiert.

Ein Antriebsstrang für ein Fahrzeug weist eine Verbrennungskraftmaschine, ein mittels einer elektronischen Steuereinheit und mittels Betätigungseinrichtungen schaltbares kupplungsloses Getriebe mit zumindest zwei Übersetzungsstufen und ein hydrostatisches Getriebe auf.

Insbesondere kann das schaltbare kupplungslose Getriebe ohne zusätzliche Synchronisationseinrichtungen ausgebildet sein. Das hydrostatische Getriebe besteht aus einer Hydropumpe und einem Hydromotor, welche im geschlossenen Kreis verbunden sind. Die Anordnung ist derart, dass die Drehzahl des Hydromotors in Abhängigkeit von einem Steuersignal zur Verstelleinrichtung von Hydropumpe und/oder zur Verstelleinrichtung vom Hydromotor steuerbar ist, welches die Steuereinheit mittels Sollwertvorgabe über ein Fahrpedal oder als Funktion der Antriebsdrehzahl der Verbrennungskraftmaschine berechnet, wobei die Übersetzungsstufen mittels der Betätigungseinrichtungen schaltbar sind. Erfindungsgemäß ist die Steuereinheit so ausgebildet, dass sie die Verstelleinrichtung der Hydropumpe sowie die Betätigungseinrichtungen flir das schaltbare kupplungslose Getriebe zu dessen elektronischer Synchronisation mittels einer Kennlinie steuert. Diese Kennlinie stellt das Drehzahlverhältnis des Hydromotors zu der Hydropumpe in Abhängigkeit von einem Stellsignal zur Verstelleinrichtung der Hydropumpe für einen lastfreien Zustand des Getriebes dar.

Die erfindungsgemäße Ausgestaltung erlaubt es auf einfache und reproduzierbare Weise, eine Synchronisation des schaltbaren kupplungslosen Getriebes ohne die Verwendung herkömmlicher Synchronisationseinrichtungen zu ermöglichen, wobei ein beim Schalten auftretender Getriebestufensprung über das hydrostatische Getriebe kompensierbar ist. Somit ist auch ein Wechsel zwischen verschiedenen Übersetzungsverhältnissen des Getriebes während der Fahrt mittels der entsprechenden Digitalelektronik möglich.

Bevorzugt ist ein Proportionalventil vorgesehen, mittels welchem der Schwenkwinkel der Hydropumpe, d.h. deren Fördervolumen, verstellbar ist. Das erforderliche Stellsignal liefert die Steuereinheit auf Basis einer Sollwertvorgabe über ein Fahrpedal oder in Abhängigkeit von der Antriebsdrehzahl der Verbrennungskraftmaschine, welche mittels eines ersten Drehzahlsensors aufnehmbar ist.

Zur Sicherstellung der Funktion des Antriebsstrangs ist an dem schaltbaren Getriebe bevorzugt ein Schalter vorgesehen, welcher ein Signal an die Steuereinheit liefert, ob sich das Getriebe in Neutralposition befindet oder eine Übersetzungsstufe (Gang) eingelegt ist.

Bevorzugt sind die Betätigungseinrichtungen, mittels welcher die Übersetzungsstufen schaltbar sind, Ventile und Elektromagnete, welche von der Steuereinheit ansteuerbar und mittels Federkraft wieder auskuppelbar sind, sobald ein entsprechendes Schaltsignal der Steuereinheit zurückgesetzt wird und das Getriebe mittels des Stellsignals, welches anhand der Kennlinie ermittelt wird, in einem lastfreien Zustand gesteuert wird.

Zur elektronischen Synchronisation des Betriebes sind ein zweiter Drehzahlsensor zur Messung der Eingangsdrehzahl des Getriebes und ein dritter Drehzahlsensor zur Messung der Abtriebsdrehzahl des Getriebes im Bereich der Eingangs- bzw. Ausgangswelle des Getriebes vorgesehen.

Beim Verfahren zum Steuern eines Antriebsstranges, welcher im wesentlichen aus einer Verbrennungskraftmaschine, einem kupplungslosen Getriebe ohne mechanische Synchronisationseinrichtung und einem hydrostatischen Antrieb bzw. einem hydrostatischen Getriebe mit einer Hydropumpe, einem Hydromotor und einer Steuereinheit besteht, wird zum Gangwechsel des Getriebes dieses mittels des hydrostatischen Antriebs lastfrei gefahren und die Drehzahl des Hydromotors auf die für einen gewählten Gang des Getriebes erforderliche Synchrondrehzahl geregelt. Hierzu berechnet die Steuereinheit erfindungsgemäß eine maximal erreichbare Synchrondrehzahl des Hydromotors, wodurch der Getriebestufensprung über das entsprechend elektronisch geregelte hydrostatische Getriebe kompensiert wird. Die Berechnung der Steuereinheit erfolgt mittels einer Kennlinie, welche das Drehzahlverhältnis von Hydromotor zu Hydropumpe in Abhängigkeit von einem Stellsignal zur Verstelleinrichtung der Hydropumpe und/oder zur Verstelleinrichtung des Hydromotors für einen lastfreien Zustand des Getriebes darstellt.

Dieses Verfahren unter Verwendung einer Kennlinie ermöglicht die optimale, sichere und schnelle Ansteuerung des Systems im Hinblick auf die maximal möglichen Drehzahlen in den jeweiligen Übersetzungsverhältnissen des Getriebes des Antriebsstrangs durch die Berechnung der maximal möglichen Synchrondrehzahl des Hydromotors in Abhängigkeit der Drehzahl der Hydropumpe.

Eine vorteilhafte Ausgestaltung des erfindungsgemäßen Verfahrens besteht darin, dass die Kennlinie in Form einer Lernkurve als Set-up vor Inbetriebnahme des Antriebsstranges ermittelbar und in der Steuereinheit speicherbar ist, wobei die Stellsignale zu den Verstelleinrichtungen von Hydropumpe und/oder Hydromotor so lange kontinuierlich erhöht werden, bis das maximale Drehzahlverhältnis von Hydromotor zu Hydropumpe erreicht wird.

Bevorzugt steuert die Steuereinheit Betätigungseinrichtungen fiir die Übersetzungsstufen des Getriebes entsprechend einem gewünschten Arbeitspunkt auf der Kennlinie an. Somit kann Steuerelektronik besonders einfach und schnell anhand des aktuellen Arbeitspunktes in der Kennlinie das jeweils erforderliche Stellsignal ableiten, um das Getriebe zum Auskuppeln lastfrei zu fahren.

Besonders bevorzugt ist es im erfindungsgemäßen Steuerverfahren des Antriebsstranges, die Kennlinie in Form einer Lernkurve als Set-up zumindest für jeden neuen hydrostatischen Antrieb bzw. für jedes neue hydrostatische Getriebe aufzunehmen. Dies ermöglicht eine individuelle Anpassung an die jeweiligen verwendeten Bauelemente und somit eine sichere Funktion des Antriebsstranges.

Besonders bevorzugt ist es auch, wenn die Kennlinie im laufenden Betriebe zur Kompensation von insbesondere Verschleiß oder alterungsbedingten Änderungen des hydrostatischen Antriebs korrigiert wird.

In einer bevorzugten Ausführungsform des Verfahrens wird die jeweils aktuelle Übersetzungsstufe des Getriebes während der Fahrt in die neutrale Position geschaltet, indem ein entsprechender Ausgang der Steuereinheit abgeschaltet wird und das Getriebe kurzzeitig über eine Änderung des Stellsignals zur Verstelleinrichtung der Hydropumpe in den lastfreien Zustand gefahren wird.

Besonders vorteilhaft ist, wenn beim erfindungsgemäßen Verfahren zum Steuern eines Antriebsstranges die Abtriebsdrehzahl des Hydromotors anhand eines Stellsignals, welches aus der Kennlinie abgeleitet wird und den Schwenkwinkel von Hydropumpe und/oder Hydromotor bestimmt, schnell auf eine für die gewünschte Übersetzungsstufe erforderliche Synchrondrehzahl, die auch von der Verbrennungsmotorzahl abhängt, geregelt wird, wenn eine neutrale Position des Getriebes erfasst wird. Zur Synchronisation des Getriebes wird so die Drehzahl des Hydromotors über die Verstellung an das gewählte Übersetzungsverhältnis des Getriebes angepasst. Die Steuerelektronik entnimmt der Kennlinie das dazu erforderliche Stellsignal.

Generell kann bei dem erfindungsgemäßen Antriebsstrang bzw. beim Verfahren zum Steuern des Antriebsstranges ein Gangwechsel sowohl automatisch in Abhängigkeit von der Abtriebsdrehzahl des Getriebes erfolgen, als auch durch eine entsprechende Gangwahl des Fahrers über Schalteingänge der digitalen Steuereinheit ausgelöst werden. Dabei prüft die elektronische Steuereinheit jederzeit anhand der Drehzahlsignale der Hydropumpe, des Hydromotors und der Getriebeabtriebswelle, ob ein Gangwechsel im automatischen Schaltbetrieb erforderlich wird oder infolge einer manuellen Gangwahl beim Herunterschalten überhaupt möglich ist. Die dabei zu berücksichtigende maximal zu erreichende Synchrondrehzahl des Hydromotors wird mit Hilfe der Kennlinie bzw. der sogenannten Lernkurve berechnet. Die Kennlinie des Systems bezeichnet das Drehzahlverhältnis von Hydromotor zu Hydropumpe in Abhängigkeit von dem Stellsignal zur Verstelleinrichtung der Hydropumpe, welches den Schwenkwinkel bestimmt. Dies gilt für das unbelastete Getriebe. Die Kennlinie wird in Form einer Lernkurve als Set-up einmalig für einen gegebenen Antriebsstrang aufgenommen.

Um den jeweils aktuellen Gang während der Fahrt auskuppeln zu können, wird der entsprechende Ausgang der elektronischen Steuereinheit abgeschaltet, und das Getriebe wird für einen kurzen Moment (ca. 100 ms) mittels der Verstelleinrichtung lastfrei gefahren. Die zur Erkennung der jeweiligen Belastungssituation des Antriebsstranges notwendigen Informationen leitet die Steuereinheit aus der Kennlinie ab. Je nach Belastungssituation kann anhand der Kennlinie das erforderliche Stellsignal ermittelt werden, um das Getriebe schnellstmöglich in den lastfreien Zustand zu fahren.

Sobald ein Schalter die Neutralposition des Getriebes signalisiert, wird die Motordrehzahl, d.h. die Hydropumpen-Drehzahl, und/oder das Drehzahlverhältnis von Hydropumpe zu Hydromotor anhand des Stellsignals bzw. der Stellsignale zu der Verstelleinrichtung bzw. den Verstelleinrichtungen von Hydropumpe und/oder Hydromotor auf die für den gewählten Gang erforderliche Synchrondrehzahl geregelt. Dies dauert ca. 300 ms. Das entsprechende Stellsignal wird aus der Lernkurve abgeleitet. Befindet sich die Drehzahldifferenz in einem bestimmten Toleranzbereich, schaltet die Steuereinheit über ein entsprechendes Schaltsignal die Betätigungseinrichtung des gewählten Gangs. Der Schaltvorgang ist beendet, sobald der Schalter, welcher auch die Neutralposition des Getriebes signalisiert, nun den eingekuppelten Zustand des Getriebes anzeigt. Die durchschnittliche Schaltdauer für einen kompletten Schaltvorgang liegt bei ca. 500 ms.

Die Erfindung wird nachfolgend an einer Ausführungsform anhand der beigefügten Zeichnungen näher erläutert.

In den Zeichnungen zeigen:
- Fig. 1: eine schematische Ansicht einer Ausführungsform des erfindungsgemäßen Antriebsstrangs; und
- Fig. 2: ein Diagramm mit der Kennlinie.

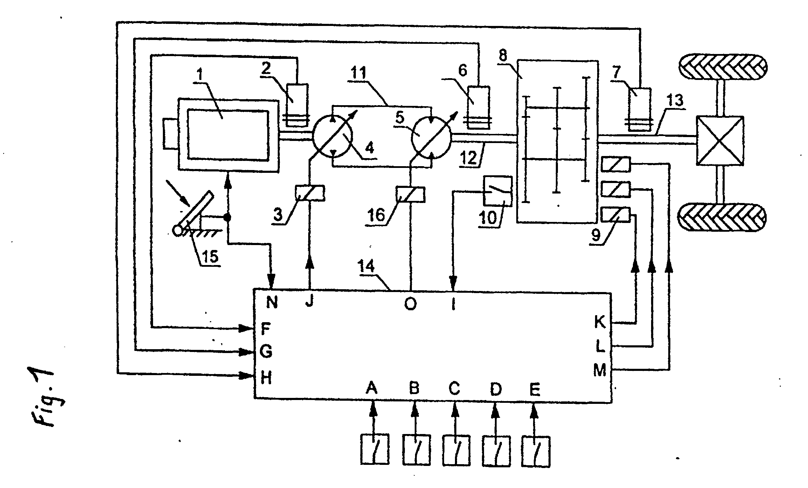

Figur 1 zeigt eine Ausführungsform des erfindungsgemäßen Antriebsstrangs. Der Antriebsstrang besteht aus einer Verbrennungskraftmaschine 1, deren Drehzahl über eine mechanische Anbindung an ein Gaspedal 15 steuerbar ist. Die Verstellung des Fördervolumens, d.h. des Schwenkwinkels, der an die Verbrennungskraftmaschine 1 gekoppelten Hydropumpe 4 erfolgt über ein Proportionalventil 3, dessen Stellsignal. J von einer Steuereinheit 14 in Abhängigkeit von der Drehzahl der Verbrennungskraftmaschine 1, welche auch der Drehzahl der Hydropumpe 4 entspricht, generiert wird. Diese Drehzahl wird von einem Drehzahlsensor 2 aufgenommen und dem Eingang F der Steuereinheit zugeführt. Das von der Hydropumpe 4 geförderte Öl zirkuliert in einem geschlossenen Kreislauf 11 und treibt dabei einen Hydromotor 5 an. Das Einstellen des durch den Hydromotor 5 tretenden Fördervolumens und somit die Drehzahldifferenz von Hydropumpe und Hydromotor kann auch über eine Verstelleinrichtung bzw. ein Proportionalventil 16, dessen Stellsignal O entsprechend dem Stellsignal J generiert werden kann, erfolgen.

Die Welle 12 des Hydromotors 5 ist an ein mechanisches Schaltgetriebe 8 gekoppelt. Die einzelnen Übersetzungsstufen des Getriebes 8 werden über Betätigungseinrichtungen 9, insbesondere über Ventile oder Elektromagnete von der Steuereinheit 14 angesteuert und mittels Federkraft wieder ausgekuppelt, sobald ein entsprechendes Schaltsignal der Steuereinheit (LM oder N) zurückgesetzt, und das Getriebe 8 über die durch das Stellsignal J bestimmten Verstellung des Hydropumpen-Fördervolumens lastfrei gefahren wird. Das lastfreie Fahren kann generell auch über die durch das Stellsignal O bestimmte entsprechende Verstellung des Volumens im Hydromotor 5 erfolgen. Ein Schalter 10 am Getriebe 8 liefert eine Information I, aus der ersichtlich wird, ob sich das Getriebe in Neutralposition befindet oder ein mechanischer Gang eingekuppelt ist. Zur Steuerung der elektronischen Synchronisation des Getriebes 8 befinden sich zwei Drehzahlsensoren 6 und 7 an der Eingangs- 12 bzw. Abtriebswelle 13 des mechanischen Getriebes 8. Diese messen jeweils die Eingangs- und Abtriebsdrehzahl. Die Verbindung des Getriebes 8 mit der Fahrzeugachse erfolgt über die mechanische Abtriebswelle 13.

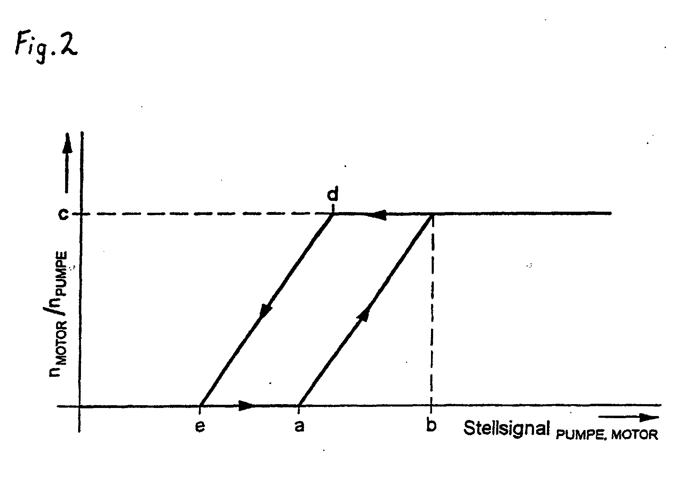

Figur 2 zeigt diagrammartig den Verlauf der Kennlinien zur erfindungsgemäßen Steuerung des Antriebsstranges, insbesondere des Antriebsstranges der Ausführungsform der Fig. 1.

Es wird nunmehr die Betriebsweise des in dem Ausführungsbeispiel dargestellten Antriebsstranges beschrieben.

Generell kann bei dem erfindungsgemäßen Antriebsstrang ein Gangwechsel sowohl automatisch in Abhängigkeit von der Abtriebsdrehzahl des mechanischen Schaltgetriebes 8 erfolgen als auch durch eine entsprechende Gangwahl des Fahrers über Schalteingänge der digitalen Steuereinheit 14 ausgelöst werden. Dabei prüft die elektronische Steuereinheit 14 jederzeit anhand der Drehzahlsignale der Hydropumpe 4, des Hydromotors 5 und der Getriebeabtriebswelle 13, ob ein Gangwechsel im automatischen Schaltbetrieb erforderlich wird oder ob ein Gangwechsel in Folge einer manuellen Gangwahl beim Herunterschalten überhaupt möglich ist. Die dabei zu berücksichtigende maximal zu erreichende Synchrondrehzahl des Hydromotors 5 wird mit Hilfe der Kennlinie bzw. der sogenannten Lernkurve berechnet. Die Kennlinie des Systems bezeichnet das Drehzahlverhältnis von Hydromotor 5 zu Hydropumpe 4 in Abhängigkeit von dem Stellsignal zur Verstelleinrichtung mit der Hydropumpe 4, welches den Schwenkwinkel bestimmt. Dies gilt für das unbelastete Getriebe 8. Die Kennlinie wird in Form einer Lernkurve als Set-up einmalig für einen gegebenen Antriebsstrang aufgenommen.

Um den jeweils aktuellen Gang während der Fahrt auskuppeln zu können, wird der entsprechende Ausgang der elektronischen Steuereinheit 14 abgeschaltet, und das mechanische Schaltgetriebe 8 wird für einen kurzen Moment (ca. 100 ms) mittels der Verstelleinrichtung lastfrei gefahren. Die zur Erkennung der jeweiligen Belastungssituation des Antriebsstranges notwendigen Informationen leitet die Steuereinheit 14 aus der Kennlinie ab. Je nach Belastungssituation kann anhand der Kennlinie das erforderliche Stellsignal ermittelt werden, um das mechanische Schaltgetriebe 8 schnellstmöglich in den lastfreien Zustand zu fahren.

Sobald ein Schalter die Neutralposition des Getriebes 8 signalisiert, wird die Motordrehzahl, d.h. die Hydropumpen-Drehzahl und/oder das Drehzahlverhältnis von Hydropumpe 4 zu Hydromotor 5 anhand des Stellsignals bzw. der Stellsignale zu der Verstelleinrichtung bzw. den Verstelleinrichtungen von Hydropumpe 4 und/oder Hydromotor 5 auf die flir den gewählten Gang erforderliche Synchrondrehzahl geregelt. Dies dauert ca. 300 ms. Das entsprechende Stellsignal wird aus der Lernkurve abgeleitet. Befindet sich die Drehzahldifferenz in einem bestimmten Toleranzbereich, schaltet die Steuereinheit 14 über ein entsprechendes Schaltsignal die Betätigungseinrichtung 9 des gewählten Gangs. Der Schaltvorgang ist beendet, sobald der Schalter 10, welcher auch die Neutralposition des mechanischen Schaltgetriebes 8 signalisiert, nun den eingekuppelten Zustand des Getriebes 8 anzeigt. Die durchschnittliche Schaltdauer für einen kompletten Schaltvorgang liegt bei ca. 500 ms.

In Fig. 8 bezeichnet die X-Achse die Größe des Stellsignals, die Y-Achse bezeichnet das Drehzahlverhältnis des Hydromotors zu der Hydropumpe. Der Verlauf der Kennlinie ergibt sich aus dem Drehzahlverhältnis des Hydromotors zu der Hydropumpe in Abhängigkeit des Stellsignals zur Verstelleinrichtung von Hydropumpe und/oder Hydromotor fiir einen lastfreien Zustand des Betriebes, wobei die Drehzahl der Verbrennungskraftmaschine während des Aufnehmens der Kennlinie in Form einer Lernkurve während des Set-up-Vorgangs konstant gehalten wird. Die einzelnen Punkte der Kennlinie (a, b, c, d, e) ergeben sich aus den konstruktiven Baugrößen der Einheiten sowie der Hysteresecharakteristik der Verstelleinrichtungen von Hydropumpen- und/oder Hydromotor-Fördervolumen.

Solange die Steuereinheit kein Verstellsignal ausgibt, steht der Schwenkwinkel der Hydropumpe in Mittellage (Nullhub) und der Schwenkwinkel des Hydromotors in einer Position, die dem maximalen Schluckvolumen entspricht. Im Verlauf des Set-up-Vorgangs wird zuerst der Schwenkwinkel der Hydropumpe 4 über den gesamten Bereich verstellt und anschließend der Schwenkwinkel des Hydromotors in die Endlage gefahren, die dem minimalen Schluckvolumen entspricht. Der Anfahrpunkt a des Antriebsstrangs liefert eine Information über das Totband der Verstelleinrichtung. Das maximal erreichbare Drehzahlverhältnis c wird bei maximalem Schwenkwinkel der Hydropumpe und bei minimalen Schwenkwinkel des Hydromotors erreicht. Anhand dieses Wertes kann die Steuereinheit 14 die jeweils maximale Synchrondrehzahl des Hydromotors in Abhängigkeit vom Stellsignal und von der Hydropumpen-Drehzahl ermitteln. Die Steuerung des Antriebsstrangs erfolgt dann entsprechend den obigen Ausführungen.

## Patentansprüche

1. Antriebsstrang für ein Fahrzeug, welcher eine Verbrennungskraftmaschine (1), ein mittels einer elektronischen Steuereinheit (14) und mittels Betätigungseinrichtungen (9) schaltbares kupplungsloses Getriebe (8) mit zumindest zwei Übersetzungsstufen und ein hydrostatisches Getriebe (4, 5) aufweist, dessen Hydropumpe (4) und Hydromotor (5) im geschlossenen Kreis (11) verbunden sind, wobei die Drehzahl des Hydromotors (5) in Abhängigkeit von einem Stellsignal zur Verstelleinrichtung (3) der Hydropumpe (4) und/oder zur Verstelleinrichtung (16) des Hydromotors (5) steuerbar ist, welches die Steuereinheit (14) mittels Sollwertvorgabe über ein Fahrpedal oder als Funktion der Antriebsdrehzahl der Verbrennungskraftmaschine (1) berechnet, wobei die Übersetzungsstufen mittels der Betätigungseinrichtungen (9) schaltbar sind,
**gekennzeichnet durch** eine derartige Ausbildung der Steuereinheit (14), dass diese die Verstelleinrichtung (3) der Hydropumpe (4) sowie die Betätigungseinrichtungen (9) für das Getriebe (8) zu dessen elektronischer Synchronisation mittels einer Kennlinie steuert, welche das Drehzahlverhältnis des Hydromotors (5) zu der Hydropumpe (4) in Abhängigkeit von einem Stellsignal zur Verstelleinrichtung (3, 16) der Hydropumpe (4) und/oder des Hydromotors (5) für einen lastfreien Zustand des Getriebes (8) darstellt.

2. Antriebsstrang nach Anspruch 1, **dadurch gekennzeichnet, dass** zum Verstellen der Hydropumpe (4) deren Schwenkwinkel (Fördervolumen) mittels eines Proportionalventils (3) verstellbar ist, dessen erforderliches Stellsignal (J) die Steuereinheit (14) auf Basis der Sollwertvorgabe über ein Fahrpedal oder in Abhängigkeit von der Antriebsdrehzahl der Verbrennungskraftmaschine (1) liefert, welche mittels eines ersten Drehzahlsensors (2) aufnehmbar ist

3. Antriebsstrang nach Anspruch 2, **dadurch gekennzeichnet, dass** am Getriebe (8) ein Schalter (10) vorgesehen ist, welcher ein Signal an die Steuereinheit (14) liefert, ob sich das Getriebe (8) in Neutralposition befindet oder eine Übersetzungsstufe (Gang) eingekuppelt ist.

4. Antriebsstrang nach Anspruch 3, **dadurch gekennzeichnet, dass** die Betätigungseinrichtungen (9) Ventile oder Elektromagnete sind, welche von der Steuereinheit (14) ansteuerbar und mittels Federkraft wieder auskuppelbar sind, sobald ein entsprechendes Schaltsignal (K, L, M) der Steuereinheit (14) zurückgesetzt und das Getriebe (8) mittels des Stellsignals (J), das anhand der Kennlinie ermittelt wird, in einen lastfreien Zustand gesteuert wird.

5. Antriebsstrang nach einem der Ansprüche 1 bis 4, **dadurch gekennzeichnet, dass** ein zweiter Drehzahlsensor (6) zur Messung der Eingangsdrehzahl des Getriebes (8) und ein dritter Drehzahlsensor (7) zur Messung der Abtriebsdrehzahl des Getriebes (8) zur elektronischen Synchronisation des Getriebes (8) vorgesehen sind.

6. Verfahren zum Steuern eines Antriebsstranges mit einer Verbrennungskraftmaschine (1), einem kupplungslosen Getriebe (8) ohne mechanische Synchronisationseinrichtung und einem hydrostatischen Antrieb (4, 5) mit verstellbarer Hydropumpe (4), gegebenenfalls verstellbarem Hydromotor (5) und einer Steuereinheit (14), wobei zum Gangwechsel des Getriebes (8) dieses mittels des hydrostatischen Antriebs (4, 5) lastfrei gefahren und die Drehzahl des Hydromotors (5) auf die für einen gewählten Gang des Getriebes (8) erforderliche Synchrondrehzahl geregelt wird, indem die Steuereinheit (14) eine maximal erreichbare Synchrondrehzahl des Hydromotors (5) mittels einer Kennlinie berechnet, welche das Drehzahlverhältnis von Hydromotor (5) zu Hydropumpe (4) in Abhängigkeit von einem Stellsignal zur Verstelleinrichtung der Hydropumpe (4) und/oder zur Verstelleinrichtung des Hydromotors (5) für einen lastfreien Zustand des Getriebes (8) darstellt.

7. Verfahren nach Anspruch 6, wobei die Kennlinie in Form einer Lernkurve als Set-up vor Inbetriebnahme des Antriebsstranges ermittelbar und in der Steuereinheit (14) speicherbar ist, wobei die Stellsignale (J, O) zu den Verstelleinrichtungen (3, 16) von Hydropumpe (4) und/oder Hydromotor (5) solange kontinuierlich erhöht werden, bis das maximale Drehzahlverhältnis von Hydromotor zu Hydropumpe erreicht wird.

8. Verfahren nach Anspruch 6 oder 7, wobei die Steuereinheit (14) Betätigungseinrichtungen (9) für Übersetzungsstufen des Getriebes (8) entsprechend einem gewünschten Arbeitspunkt auf der Kennlinie ansteuert.

9. Verfahren nach einem der Ansprüche 6 bis 8, wobei die Kennlinie in Form einer Lernkurve als Set-up zumindest für jeden neuen hydrostatischen Antrieb aufgenommen wird.

10. Verfahren nach Anspruch 9, wobei die Kennlinie im laufenden Betrieb zur Kompensation von insbesondere verschleiß- und alterungsbedingten Änderungen des hydrostatischen Antriebs (4, 5) korrigiert wird.

11. Verfahren nach einem der Ansprüche 8 bis 10, wobei die jeweils aktuelle Übersetzungsstufe während der Fahrt in die neutrale Position geschaltet wird, indem ein entsprechender Ausgang (K, L, M) der Steuereinheit (14) abgeschaltet und das Getriebe (8) kurzzeitig über eine Änderung des Stellsignals zur Verstelleinrichtung der Hydropumpe (4) in den lastfreien Zustand gefahren wird.

12. Verfahren nach Anspruch 11, wobei das Getriebe (8) während etwa 100 ms im lastfreien Zustand gefahren wird.

13. Verfahren nach Anspruch 8 bis 12, wobei bei Erfassen einer neutralen Position des Getriebes (8) die Antriebsdrehzahl des Hydromotors (5) anhand eines des Schwenkwinkel von Hydropumpe (4) und/oder Hydromotor (5) bestimmenden, aus der Lernkurve abgeleiteten Stellsignals (J, O) schnell auf eine für die gewünschte Übersetzungsstufe erforderliche Synchrondrehzahl geregelt wird.

## Claims

1. Drive train for a vehicle, which has an internal combustion engine (1), a clutchless gearbox (8), which can be shifted by means of an electronic control unit (14) and by means of activation devices (9) and which has at least two transmission ratios, and a hydrostatic gearbox (4, 5) whose hydraulic pump (4) and hydraulic motor (5) are connected in a closed circuit (11), it being possible to control the rotational speed of the hydraulic motor (5) as a function of an actuation signal to the adjustment device (3) of the hydraulic pump (4) and/or to the adjustment device (16) of the hydraulic motor (5), which actuation signal is calculated by the control unit (14) by means of a predefined setpoint value using an accelerator pedal or as a function of the drive speed of the internal combustion engine (1), it being possible to shift the transmission ratios by means of the activation devices (9), **characterized by** an embodiment of the control unit (14) which is such that it controls the adjustment device (3) of the hydraulic pump (4) and the activation devices (9) for the gearbox (8) in order to synchronize it electronically by means of a characteristic curve which represents the rotational speed ratio of the hydraulic motor (5) with respect to the hydraulic pump (4) as a function of an actuation signal to the adjustment device (3, 16) of the hydraulic pump (4) and/or of the hydraulic motor (5) for a load-free state of the gearbox (8).

2. Drive train according to Claim 1, **characterized in that**, in order to adjust the hydraulic pump (4), its tilt angle (feed volume) can be adjusted by means of a proportional valve (3) whose necessary actuation signal (J) is supplied by the control unit (14) on the basis of the predefined setpoint value using an accelerator pedal or as a function of the drive speed of the internal combustion engine (1) which can be sensed by means of a first rotational speed sensor (2).

3. Drive train according to Claim 2, **characterized in that** a switch (10) which supplies a signal to the control unit (14) indicating whether the gearbox (8) is in the neutral position or a transmission speed (gear) is engaged is provided on the gearbox (8).

4. Drive train according to Claim 3, **characterized in that** the activation devices (9) are valves or electromagnets which can be driven by the control unit (14) and disengaged again by means of spring force as soon as a corresponding switching signal (K, L, M) of the control unit (14) is reset and the gearbox (8) is placed in a load-free state by means of the actuation signal (J) which is determined by reference to the characteristic curve.

5. Drive train according to one of Claims 1 to 4, **characterized in that** a second rotational speed sensor (6) is provided for measuring the input speed of the gearbox (8), and a third rotational speed sensor (7) is provided for measuring the output speed of the gearbox (8) for the electronic synchronization of the gearbox (8).

6. Method for controlling a drive train with an internal combustion engine (1), a clutchless gearbox (8) without mechanical synchronization device and a hydrostatic drive (4, 5) with adjustable hydraulic pump (4), if appropriate adjustable hydraulic motor (5) and a control unit (14), in which case, in order to change the gear of the gearbox (8), the latter is operated without load by means of the hydrostatic drive (4, 5) and the rotational speed of the hydraulic motor (5) is adjusted to the synchronizing speed which is necessary for a selected gear of the gearbox (8) in that the control unit (14) calculates a maximum achievable synchronizing speed of the hydraulic motor (5) by means of a characteristic curve which represents the rotational speed ratio of the hydraulic motor (5) with respect to the hydraulic pump (4) as a function of an actuation signal to the adjustment device of the hydraulic pump (4) and/or to the adjustment device of the hydraulic motor (5) for a load-free state of the gearbox (8).

7. Method according to Claim 6, it being possible to determine the characteristic curve in the form of a learning curve as a set-up before the drive train is put into operation and to store it in the control unit (14), the actuation signals (J, O) to the adjustment devices (3, 16) of the hydraulic pump (4) and/or of the hydraulic motor (5) being continuously increased until the maximum rotational speed ratio of the hydraulic motor with respect to the hydraulic pump is reached.

8. Method according to Claim 6 or 7, the control unit (14) driving activation devices (9) for transmission ratios of the gearbox (8) in accordance with a desired working point on the characteristic curve.

9. Method according to one of Claims 6 to 8, the characteristic curve being recorded in the form of a learning curve as a set-up at least for each new hydrostatic drive.

10. Method according to Claim 9, the characteristic curve being corrected during ongoing operation in order to compensate, in particular, changes in the hydrostatic drive (4, 5) which are due to wear and ageing.

11. Drive train according to one of Claims 8 to 10, the respective current transmission speed being switched into the neutral position during driving in that a corresponding output (K, L, M) of the control unit (14) is switched off and the gearbox (8) is briefly placed in the load-free state by changing the actuation signal to the adjustment device of the hydraulic pump (4).

12. Method according to Claim 11, the gearbox (8) being operated in the load-free state for approximately 100 ms.

13. Method according to Claims 8 to 12, in which, when a neutral position of the gearbox (8) is sensed, the drive speed of the hydraulic motor (5) is quickly regulated, by means of an actuation signal (J, O) which determines the tilt angle of the hydraulic pump (4) and/or of the hydraulic motor (5) and is derived from the learning curve, to a synchronizing speed which is necessary for the desired transmission speed.

## Revendications

1. Ensemble de propulsion pour un véhicule, lequel présente un moteur à combustion interne (1), une boîte de transmission (8) sans embrayage ayant au moins deux rapports de démultiplication commandée à l'aide d'un module de commande électronique (14) et par des dispositifs d'actionnement (9) et une boîte de transmission hydrostatique (4, 5) dont la pompe hydraulique (4) et le moteur hydraulique (5) sont reliés en circuit fermé (11), la vitesse de rotation du moteur hydraulique (5) pouvant varier en fonction d'un signal de commande adressé au dispositif variateur (3) de la pompe hydraulique (4) et/ou adressé au dispositif variateur (16) du moteur hydraulique (5), lequel est calculé par le module de commande (14) à l'aide d'une valeur de consigne communiquée par une pédale des gaz ou sous la forme d'une fonction de la vitesse de rotation motrice du moteur à combustion interne (1), les rapports de démultiplication pouvant être changés à l'aide des dispositifs d'actionnement (9),
**caractérisé par** une configuration du module de commande (14) telle que celui-ci commande le dispositif variateur (3) de la pompe hydraulique (4) ainsi que les dispositifs d'actionnement (9) de la boîte de transmission (8) en vue de sa synchronisation électronique au moyen d'une courbe caractéristique, laquelle représente le rapport de vitesses de rotation du moteur hydraulique (5) et de la pompe hydraulique (4) en fonction d'un signal de commande adressé au dispositif variateur (3, 16) de la pompe hydraulique (4) et/ou du moteur hydraulique (5) pour une situation hors charge de la boîte de transmission (8).

2. Ensemble de propulsion selon la revendication 1, **caractérisé en ce que** le signal de commande (J) nécessaire pour régler la pompe hydraulique (4) dont l'angle de rotation (volume transporté) est réglable à l'aide d'une vanne proportionnelle (3) est délivré par le module de commande (14) à l'aide d'une valeur de consigne communiquée par une pédale des gaz ou en fonction de la vitesse de rotation motrice du moteur à combustion interne (1), laquelle peut être collectée à l'aide d'un premier capteur tachymétrique (2).

3. Ensemble de propulsion selon la revendication 2, **caractérisé en ce qu'**un commutateur (10) est prévu sur la boîte de transmission (8), lequel délivre un signal au module de commande (14) indiquant si la boîte de transmission (8) se trouve en position neutre ou si un rapport de démultiplication (une vitesse) est engagé.

4. Ensemble de propulsion selon la revendication 3, **caractérisé en ce que** les dispositifs d'actionnement (9) sont des vannes ou des électroaimants qui peuvent être commandés par le module de commande (14) et qui peuvent de nouveau être désengagés au moyen de la force d'un ressort dès qu'un signal logique (K, L, M) correspondant réinitialise le module de commande (14) et que la boîte de transmission (8) est amenée dans une situation hors charge au moyen du signal de commande (J) qui est déterminé à l'aide de la courbe caractéristique.

5. Ensemble de propulsion selon l'une des revendications 1 à 4, **caractérisé en ce que** sont prévus un deuxième capteur tachymétrique (6) pour mesurer la vitesse de rotation d'entrée de la boîte de transmission (8) et un troisième capteur tachymétrique (7) pour mesurer la vitesse de rotation motrice de la boîte de transmission (8) en vue de la synchronisation électronique de la boîte de transmission (8).

6. Procédé pour commander un ensemble de propulsion comprenant un moteur à combustion interne (1), une boîte de transmission (8) sans dispositif de synchronisation mécanique et un entraînement hydrostatique (4, 5) comprenant une pompe hydraulique (4) réglable, un moteur hydraulique (5) éventuellement réglable et un module de commande électronique (14), le changement de rapport de la boîte de transmission (8) s'effectuant en amenant celle-ci en situation hors charge à l'aide de l'entraînement hydrostatique (4, 5) et en régulant la vitesse de rotation du moteur hydraulique (5) à la vitesse de rotation de synchronisation nécessaire pour un rapport choisi de la boîte de transmission (8) en faisant calculer par le module de commande (14) une vitesse de rotation de synchronisation maximale possible du moteur hydraulique (5) au moyen d'une courbe caractéristique qui représente le rapport de vitesses de rotation du moteur hydraulique (5) et de la pompe hydraulique (4) en fonction d'un signal de commande adressé au dispositif variateur de la pompe hydraulique (4) et/ou au dispositif variateur du moteur hydraulique (5) pour une situation hors charge de la boîte de transmission (8).

7. Procédé selon la revendication 6, avec lequel la courbe caractéristique peut être déterminée sous la forme d'une courbe d'apprentissage comme configuration avant la mise en service de l'ensemble propulseur et peut être enregistrée dans le module de commande (14), les signaux de commande (J, O) adressés aux dispositifs variateurs (3, 16) de la pompe hydraulique (4) et du moteur hydraulique (5) pouvant être augmentés continuellement jusqu'à ce que le rapport de vitesses de rotation maximale entre le moteur hydraulique et la pompe hydraulique soit atteint.

8. Procédé selon la revendication 6 ou 7, avec lequel le module de commande (14) commande les dispositifs d'actionnement (9) des rapports de démultiplication de la boîte de transmission (8) en fonction d'un point de fonctionnement voulu sur la courbe caractéristique.

9. Procédé selon l'une des revendications 6 à 8, avec lequel la courbe caractéristique est enregistrée sous la forme d'une courbe d'apprentissage comme configuration au moins pour chaque nouveau mécanisme d'entraînement hydrostatique.

10. Procédé selon la revendication 9, avec lequel la courbe caractéristique est corrigée en cours de fonctionnement pour compenser les modifications du mécanisme d'entraînement hydrostatique (4, 5), notamment liées à l'usure et au vieillissement.

11. Procédé selon l'une des revendications 8 à 10, avec lequel le rapport de démultiplication courant respectif est amené en position neutre pendant le déplacement en désactivant la sortie (K, L, M) correspondante du module de commande (14) et en amenant la boîte de transmission (8) pendant un court instant en situation hors charge en modifiant le signal de commande adressé au dispositif variateur de la pompe hydraulique (4).

12. Procédé selon la revendication 11, avec lequel la boîte de transmission (8) est amenée en situation hors charge pendant 100 ms environ.

13. Procédé selon les revendications 8 à 12, avec lequel la vitesse de rotation motrice du moteur hydraulique (5) est régulée rapidement à une vitesse de rotation de synchronisation nécessaire pour le rapport de démultiplication souhaité lors de la détection d'une position neutre de la boîte de transmission (8) au moyen d'un signal de commande (J, O) dérivé de la courbe d'apprentissage et déterminant l'angle de rotation de la pompe hydraulique (4) et/ou du moteur hydraulique (5).
